# EUROPÄISCHE PATENTSCHRIFT

(11) **EP 1 970 650 B1**
(45) Veröffentlichungstag und Bekanntmachung des Hinweises auf die Patenterteilung: **30.05.2012**
(21) Anmeldenummer: 08004516.4
(22) Anmeldetag: 12.03.2008
(51) Int. Cl.: F25B 17/08, F25B 41/06, F16K 5/10, F16K 11/087, F25B 41/04

(54) **Drei wege Umschaltventil**
Three ways valve
Vanne à trois voies

(30) Priorität: 12.03.2007 AT 3842007
(43) Veröffentlichungstag der Anmeldung: 17.09.2008
(73) Patentinhaber: Vaillant GmbH, 42859 Remscheid (DE)
(72) Erfinder: Burgdorf, Achim, 42929 Wermelskirchen (DE); Lang, Rainer, Dr., 51519 Odenthal (DE); Marth, Frank, 56581 Melsbach (DE); Neubert, Marcel, 08209 Auerbach (DE); Wienen, Johann, 46359 Heiden (DE)
(74) Vertreter: Hocker, Thomas

(56) Entgegenhaltungen:
- BE-A7- 1 000 556
- DE-A1- 10 134 699
- FR-A- 2 651 565
- US-A- 5 944 055

## Beschreibung

Die Erfindung bezieht sich auf ein 3-Wege-Umschaltventil mit drei Anschlüssen sowie eine Adsorptionswärmepumpe mit einem derartigen Ventil.

Übliche 3-Wege-Umschaltventile verfügen über drei gleiche Strömungswege, so dass in allen Schaltzuständen unabhängig von der Strömungsrichtung der Strömungswiderstand konstant ist.

Bei Adsorptions-Wärmepumpen wird ein von einer Umweltwärmequelle verdampftes Kältemittel von einem Adsorber adsorbiert, wodurch dieser sich bei der Adsorption erhitzt. Diese Wärme wird als Nutzwärme abgeführt. Anschließend muss das Kältemittel bei der Desorption wieder aus dem Adsorber, der dann als Desorber fungiert, durch Wärmezufuhr ausgetrieben werden. Das Kältemittel kondensiert an einem Kondensator, der wiederum die Wärme als Nutzwärme abgibt. Diese Nutzwärme während der Desorption ist deutlich geringer als die Nutzwärme während der Adsorption. Demzufolge kann es während der Desorptionsphase notwendig sein, zusätzlich zur Kondensationswärme des aus dem Desorber stammenden Kältemittels weitere Wärme in das System einzubringen.

BE-A-1 000 556 7 offenbart ein 3-Wege-Umschaltventile gemäß Oberbegriff des Anspruchs 1.

Aufgabe der vorliegenden Erfindung ist es, ein 3-Wege-Umschaltventil vorzugsweise für den Betrieb einer Adsorptionswärmepumpe zu schaffen, welches je nach Schaltstellung unterschiedliche Strömungswiderstände aufweist und somit eine bedarfsgerechte Verteilung und Absperrung ermöglicht.

Dies wird dadurch erreicht, dass bei einem 3-Wege-Umschaltventil mit drei Anschlüssen und einem Schaltelement mit drei miteinander verbundenen Durchströmungskanälen, mindestens einer der drei Durchströmungskanäle einen anderen Querschnitt aufweist als die anderen Durchströmungskanäle oder in diesem eine Drossel vorhanden ist. Hierdurch wird erreicht, dass der Strömungswiderstand unterschiedlich ist, wodurch sich die Aufteilung der Volumenstromverhältnisse einstellen lässt.

Vorteilhafte Ausgestaltungen ergeben sich aus den Merkmalen der abhängigen Ansprüche.

So können alle drei Durchströmungskanäle unterschiedliche Querschnitte aufweisen und damit unterschiedliche Charakteristika aufweisen. Einen ähnlichen Effekt lässt sich mit Drosseln erzielen. Ist die Geometrie auf beiden Seiten der Durchströmung unterschiedlich, so hängt der Strömungswiderstand der Drossel von der Strömungsrichtung ab.

Verfügt eine Adsorptionswärmepumpe mit einem Wärmepumpenmodul, in dem sich ein Adsorber/Desorber sowie ein Verdampfer/Kondensator befinden, einer Wärmequelle und einer Wärmesenke über ein derartiges 3-Wege-Umschaltventil, so kann mittels des 3-Wege-Umschaltventils in der Desorptionsphase die Wärmequelle entweder nur mit dem Adsorber/Desorber oder mit dem Adsorber/Desorber und parallel mit der Wärmesenke verbunden werden. Hierdurch ist ein erhöhter Heizbetrieb während der Desorption möglich.

Während der Adsorptionsphase verbindet das 3-Wege-Umschaltventil den Adsorber/Desorber mit der Wärmesenke und die Durchströmung der Wärmequelle wird verschlossen. Wird parallel der Adsorber/Desorber und die Wärmesenke durchströmt, so ist es besonders vorteilhaft, wenn der Durchströmungskanal, in dem sich die Drossel befindet, mit der Wärmesenke verbunden ist. Hierdurch wird erreicht, dass nur ein vergleichweise geringer Teil des Fluidstroms für die Direktheizung verwendet wird.

Die Erfindung wird nun anhand der folgenden Figuren detailliert erläutert. Hierbei zeigen
Figuren 1 bis 4 das erfindungsgemäße 3-Wege-Umschaltventil in verschiedenen Schaltstellungen,
Figur 5 eine Variante mit vorteilhaften Ausgestaltungen,
Figuren 6 bis 9 eine Wärmepumpe in verschiedenen Betriebszuständen mit dem zuvor beschriebenen 3-Wege-Umschaltventil.

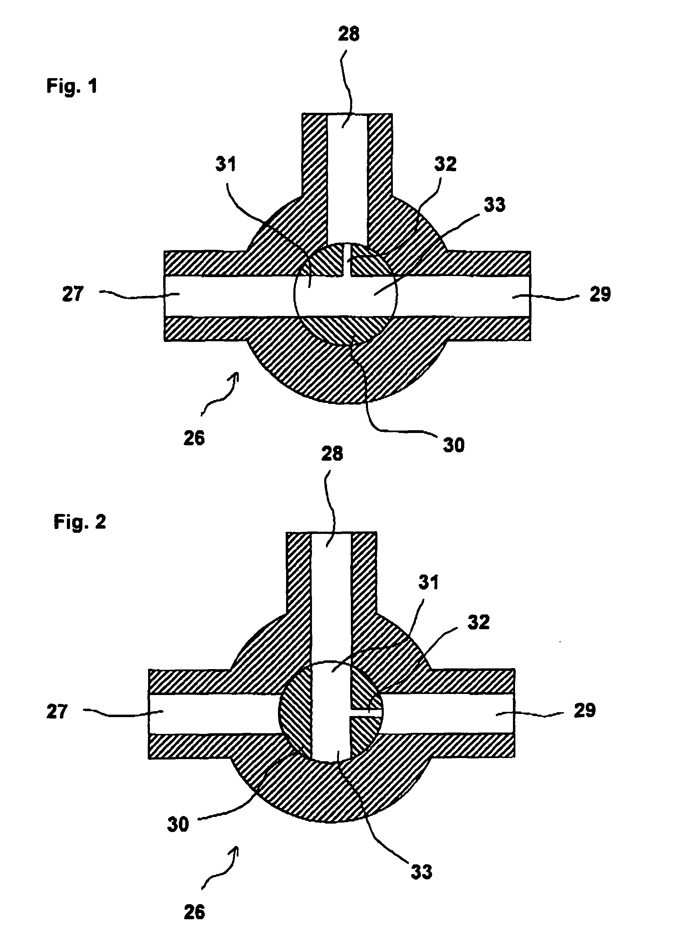

Figur 1 zeigt ein 3-Wege-Umschaltventil 26 mit drei Anschlüssen 27, 28 und 29. Im 3-Wege Umschaltventil 26 befindet sich ein Schaltelement 30 in Form eines Kugelküken mit drei Durchströmungskanälen 31, 32 und 33. Hierbei verfügte der Durchströmungskanal 32 über einen geringeren Durchmesser als die beiden anderen Durchströmungskanälen 31 und 33, die nahtlos ineinander übergehen während der Durchströmungskanal 32 rechtwinklig in die beiden anderen Durchströmungskanäle 31, 33 mündet.

Die Figuren 1 bis 4 zeigen das 3-Wege-Umschaltventil 26 in jeweils unterschiedlichen Schaltstellungen.

Figur 1 zeigt, dass die Anschlüsse 27, 29 über die beiden Durchströmungskanäle 31, 33 miteinander verbunden sind. Über den Durchströmungskanal 32 mit geringerem Durchmesser ist auch der Anschluss 28 mit den beiden anderen Anschlüssen 27, 29 verbunden. Wird der Anschluss 27 mit einem Fluid beaufschlagt, so strömt der größte Teil dieses Fluids über den Anschluss 29 ab, während nur ein geringer Teil über den Durchströmungskanal 32 in den Anschluss 28 fließt. Dient der Anschluss 28 als Eingang, so würde sich das Fluid gleichmäßig auf die beiden Anschlüsse 27, 29 verteilen.

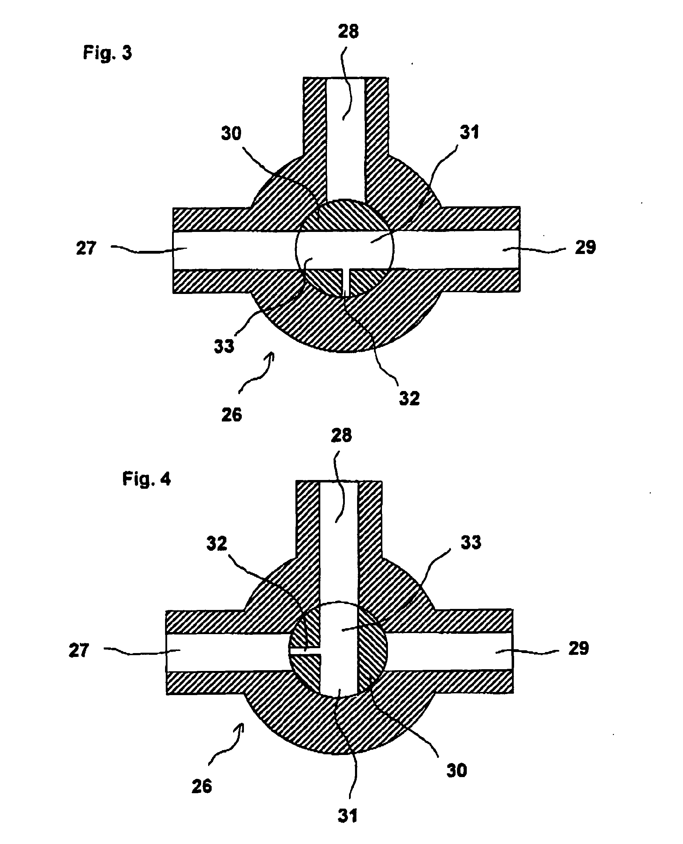

Figur 2 zeigt das 3-Wege-Umschaltventil 26 mit um 90° im Uhrzeigersinn gedrehten Schaftelement 30. Somit sind die Anschlüsse 28, 29 miteinander verbunden, während der Anschluss 27 gesperrt ist. Figur 3 zeigt das 3-Wege-Umschaltventil 26 mit abermals um 90° im Uhrzeigersinn gedrehten Schaltelement 30. Somit sind die Anschlüsse 27, 29 miteinander verbunden, während der Anschluss 28 gesperrt ist. In Figur 4 sind die Anschlüsse 27 und 28 miteinander verbunden, während der Anschluss 29 gesperrt ist.

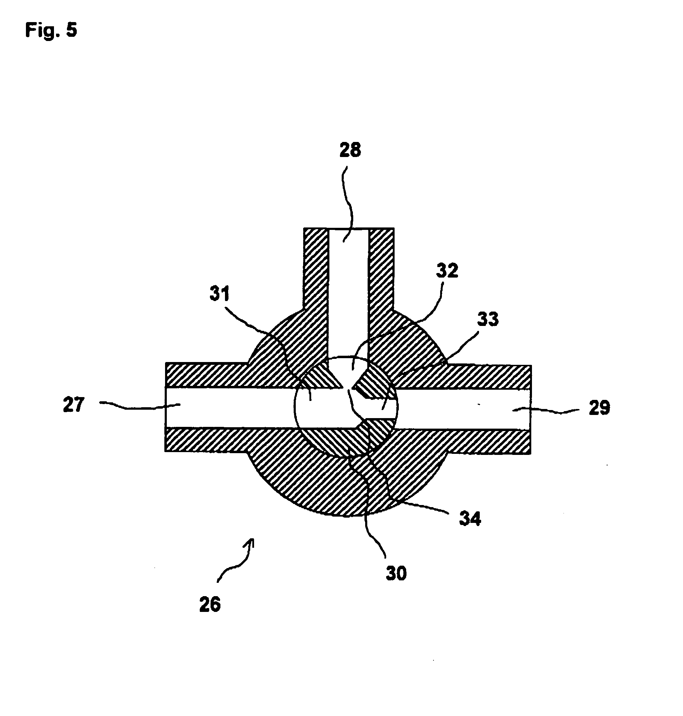

Figur 5 zeigt eine Variante des erfindungsgemäßen 3-Wege-Umschaltventils 26. Hierbei verfügen die Durchströmungskanäle 31, 33 über unterschiedliche Durchmesser. Der Durchströmungskanal 32 verfügt über einen konischen Verlauf in Richtung der Durchströmungskanäle 31, 33, in die er mit einer Drossel 34 einmündet. Demzufolge verfügt der Durchströmungskanal 32 in Richtung des Inneren des Schaltelements 30 über einen wesentlich geringeren Strömungswiderstand als in umgekehrter Richtung.

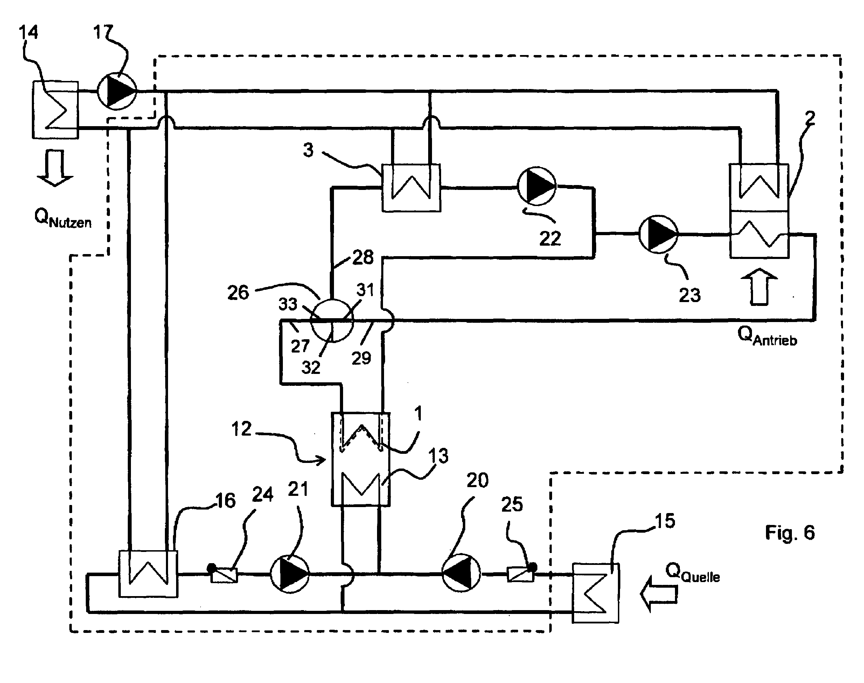

Figur 6 zeigt eine Adsorptionswärmepumpe mit einem erfindungsgemäßen 3-Wege-Umschaltventil 26 mit einem zentralen Wärmepumpenmodul 12, in dem sich ein Adsorber/Desorber 1 sowie ein Verdampfer/Kondensator 13 befinden. Der Adsorber/Desorber 1 ist auf der einen Seite mit dem Anschluss 27 des 3-Wege-Umschaltventils 26 verbunden. Ein Anschluss 28 des 3-Wege-Umschaltventils 26 ist mit einer Wärmesenke 3 verbunden, während der dritte Anschluss 29 des 3-Wege-Umschaltventils 26 mit einer Wärmequelle 2 verbunden ist. Die Wärmequelle 2 kann Wärme Q_{Antrieb} zum Beispiel von einem Brenner auf nehmen. Zwischen der Wärmesenke 3 und der Wärmequelle 2 sind zwei regelbare Pumpen 22, 23 in Reihe angeordnet. Zwischen diesen beiden Pumpen 22, 23 zeigt eine Leitung zum Wärmepumpenmodul 12 auf der dem 3-Wege-Umschaltventil 26 abgelegenen Seite. Die Wärmesenke 3 ist mit einem Verbraucher 14 über eine Pumpe 17 hydraulisch verbunden. Als Verbraucher 14 dient eine Raumheizung und / oder Brauchwasserbereitung. Die Wärmesenke 3 und der Verbraucher 14 sind ferner mit der Wärmequelle 2 verbunden. Der Verdampfer/Kondensator 13 ist parallel über jeweils ein Rückschlagventil 24, 25 und eine Pumpe 20, 21 mit einer Umweltwärmequelle 15 oder einem Verbraucher 16 verbunden.

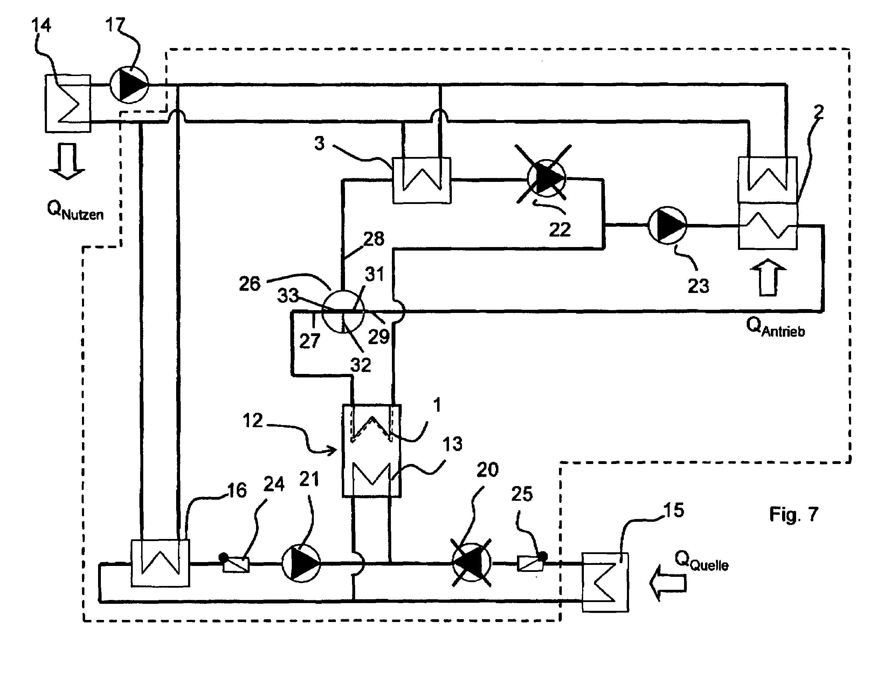

Figur 7 zeigt die Wärmepumpe in dem Betriebszustand, in dem sich das Wärmepumpenmodul 12 in der Desorptionsphase befindet; der Adsorber/Desorber 1 ist demnach zunächst mit Kältemittel befüllt. Aus der Wärmequelle 2, bei der es sich um ein konventionelles Heizgerät handeln kann, strömt ein Fluid über das 3-Wege-Umschaltventil 26 zu dem einen Eingang des Adsorber/Desorbers 1; der Ausgang 28 des 3-Wege-Umschaltventils 26 ist dabei nicht durchströmt. Das Fluid durchströmt den Adsorber/Desorber 1 und erhitzt diesen, wodurch das Kältemittel aus dem Adsorber/Desorber 1 ausgetrieben wird und zu dem Verdampfer/Kondensator 13 strömt. Das abgekühlte Fluid strömt durch den zweiten Ein/Auslass des Adsorbers/Desorbers 1 über die regelbaren Pumpe 23 wieder zur Wärmequelle 2. Da der Ausgang 28 des 3-Wege-Umschaltventils 26 nicht durchströmt wird, ist die Pumpe 22 abgeschaltet (deshalb in der Figur durchgestrichen).

Das Kältemittel, welches aus dem Adsorber/Desorber 1 bei der Desorption ausgetrieben wurde, kondensiert am Verdampfer/Kondensator 13, welcher als Kondensator agiert. Die gewonnene Wärme wird mit Hilfe der Pumpe 21 zum Verbraucher 16 geleitet. Der Verbraucher 16 ist über die Pumpe 17 mit dem Verbraucher 14 verbunden, der Nutzwärme Q_{Nutzen} für Brauchwasser und/oder Heizwasser bereitstellt. Die Pumpe 20 ist abgeschaltet (deshalb in der Figur durchgestrichen), um eine Wärmeabgabe an die Umweltwärmequelle 15 zu verhindern. Das Rückschlagventil 25 verhindert, dass die Pumpe 21 warmes Fluid zur Umweltwärmequelle 15 weiterleitet.

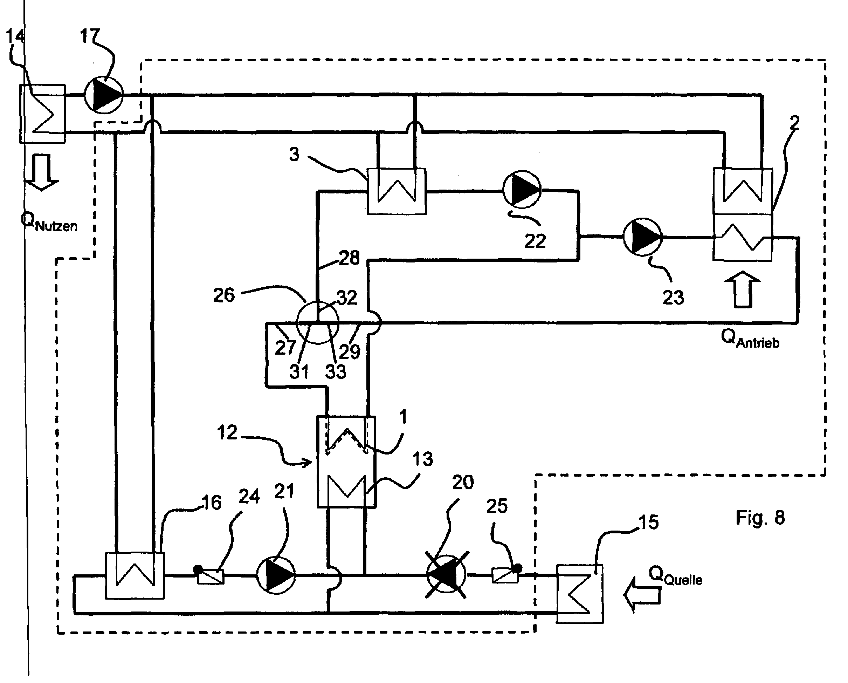

Figur 8 unterscheidet sich von Figur 7 dadurch, dass das 3-Wege-Umschaitventil 26 um 180° umgeschaltet ist und hierdurch einen Bypassbetrieb ermöglicht. Der Durchströmungskanal 32 mit dem kleineren Durchmesser, weicher senkrecht in die beiden anderen Durchströmungskanäle 31, 33 mündet, ist nun über den Anschluss 28 mit der Wärmesenke 3 verbunden. Aufgrund der Querschnittsverhältnisse und der Richtung der Durchströmungskanäle 31, 32, 33 wird der größte Anteil des Fluids, das in Anschluss 29 einströmt in Richtung Anschluss 27 geleitet, während der Rest durch den Durchströmungskanal 32 und den Anschluss 28 zur Wärmesenke 3 strömt. Der Fluidteilstrom, welcher die Wärmesenke 3 durchströmt, gibt dort thermische Energie in Richtung Verbraucher 14 ab. Anschließend strömt das abgekühlte Fluid durch die eingeschaltete regelbare Pumpe 22, vereinigt sich mit dem Fluidstrom, welcher vom Durchströmungskanal 31 und Anschluss 27 über den Desorber 1 strömt und wird über die Pumpe 23 wieder zur Wärmequelle 2 geleitet. Die Desorption mit Bypass gemäß Figur 8 ermöglicht, dass direkt Wärme von der Wärmequelle 2 zur Wärmesenke geleitet werden kann. Da in der Desorptionsphase deutlich weniger Wärme genutzt werden kann als in der Adsorptionsphase, kann hierdurch die zur Verfügung stehende Nutzwärme Q_{Nutzen} erhöht werden.

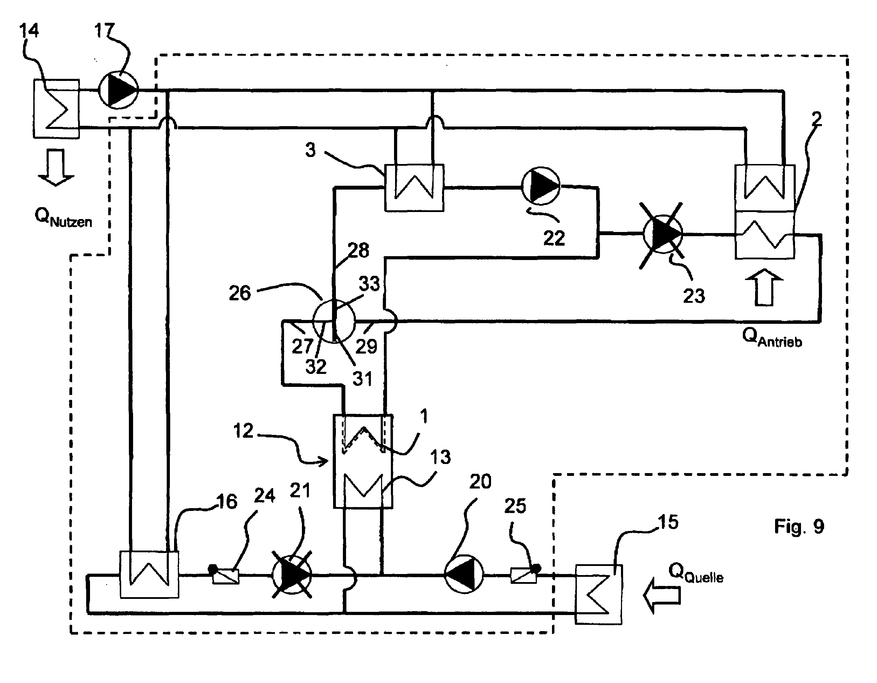

Figur 9 zeigt dieselbe Adsorptionswärmepumpe während der Adsorptionsphase. Der Adsorber/Desorber 1 agiert nun als Adsorber; in der Ausgangslage ist er trocken. Umweltwärme wird über die Umweltwärmequelle 15 dem Verdampfer/Kondensator 13, welcher als Verdampfer agiert, über die regelbare Pumpe 20 zugeführt. Der Verdampfer 13 verdampft Kältemittel in dem Wärmepumpenmodul 12. Dieses strömt zu dem Adsorber/Desorber 1, welcher als Adsorber fungiert. Die freigewordene Wärme wird vom Adsorber 1 über das 3-Wege-Umschaltventil 26, welches die Anschlüsse 27 und 28 über die Durchströmungskanäle 32, 33 verbindet und den Anschluss 29 abdichtet, zur Wärmesenke 3 geführt und von dort auf einen Heiz- oder Brauchwasserkreislauf weitergeführt. Das abgekühlte Fluid gelangt zur regelbaren Pumpe 22 und von dort zu dem anderen Eingang des Adsorber/Desorbers 1. Die Pumpen 21 und 23 sind bei diesem Vorgang abgeschaltet. Der Durchströmungskanal 32 wird in diesem Fall in umgekehrter Richtung durchströmt wie in Figur 8. Verfügt der Durchströmungskanal 32 über eine Form und Drossel 34 wie in Figur 5 dargestellt, während die Durchströmungskanäle 31, 33 gleichen Durchmesser aufweisen und ineinander übergehen, so hat das 3-Wege-Umschaltvontil 26 in der Durchströmung vom Anschluss 27 zum Anschluss 28 einen deutlich geringeren Strömungswiderstand wie bei der Durchströmung gemäß Figur 8 vom Anschluss 29 zum Anschluss 28. Während bei der Adsorption gemäß Figur 9 das 3-Wege-Umschaltventil 26 möglichst wenig drosseln soll, ist bei der Desorption mit Bypass gemäß Figur 8 gewollt, dass nur ein relativ geringer Teil des Fluidstroms zur Wärmesenke 3 gelangt.

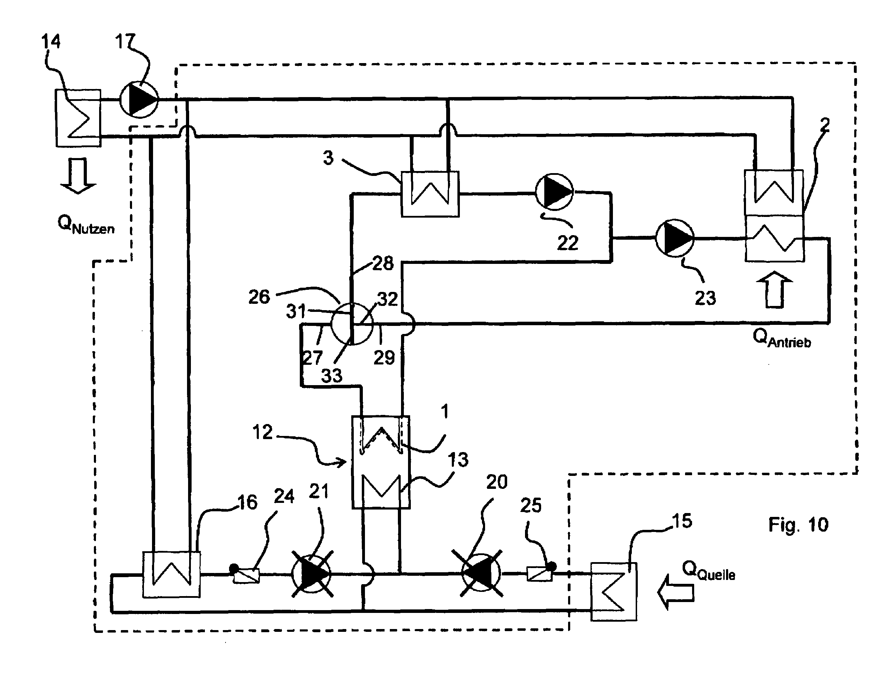

Figur 10 zeigt die Wärmepumpe im Direktheizbetrieb. Der Adsorber/Desorber 1 wird hierbei nicht durchströmt, da das 3-Wege-Umschaltventil 26 die Anschlüsse 29 und 28 über die Durchströmungskanäle 32, 31 verbindet und den Ausgang 27 abdichtet. Somit gelangt die Wärme, die in der Wärmequelle 2 auf das Fluid gegeben wird, direkt in die Wärmesenke 3, von dort über die regelbaren Pumpen 22, 23 zur Ausgangsposition. Die regelbaren Pumpen 21, 22 sind hierbei abgeschaltet.

Erfindungsgemäß können anstelle eines Adsorber/Desorbers 1 mehrere Adorber/Desorber 1 parallel geschaltet sein, wobei diese optional einzeln abgeschaltet und zugeschaltet werden können.

Soll die Wärmepumpe abgeschaltet werden, so endet der Betrieb der Wärmepumpe in allen Fällen mit Beendigung einer Adsorptionsphase. In der Adsorptionsphase nimmt der Adsorber/Desorber 1 Kältemittel auf. Nach dem Abschalten wird somit dem Adsorber/Desorber 1 keine Adsorptionswärme durch Aufnahme weiteren gasförmigen Kältemittels mehr frei. Die Adsorption muss nicht zwingend vollständig abgeschlossen sein, doch muss der Adsorber zumindest derart gesättigt sein, dass er nach dem Abschalten kein weiteres Kältemittel aufnimmt.

## Patentansprüche

1. 3-Wege-Umschaltventil (26) mit drei Anschlüssen (27, 28, 29) und einem Schatelement (30) mit drei miteinander verbundenen Durchströmungskanälen (31, 32, 33), wobei das Schaltelement (30) derart geschaltet werden kann, dass alle drei Anschlüssen (27, 28, 29) miteinander verbunden werden, **dadurch gekennzeichnet, dass** wei der drei Anschlüssen (27, 28, 29) miteinander verbunden werden oder alle drei Anschlüssen (27, 28, 29) voneinander getrennt werden, wobei mindestens einer (32) der drei Durchströmungskanäle (31, 32, 33) einen anderen Querschnitt aufweist als die anderen Durchströmungskanäle (31, 33) oder in mindestens einem (32) der drei Durchströmungskanäle (31, 32, 33) eine Drossel (34) vorhanden ist, so dass sich der Strömungswiderstand des Durchströmungskanals (32), in dem sich die Drossel (34) befindet, vom Strömungswiderstand der anderen Durchströmungskanäle (31, 33) unterscheidet.

2. 3-Wege-Umschaltventil (26) nach Anspruch 1, wobei alle drei Durchströmungskanäle (31, 32, 33) unterschiedliche Querschnitte aufweisen.

3. 3-Wege-Umschaltventil (26) nach Anspruch 1 oder 2, wobei mindestens zwei Durchströmungskanäle (31, 32, 33) Drosseln (34) aufweisen.

4. 3-Wege-Umschaltventil (26) nach einem der Ansprüche 1 bis 3 mit mindestens einer Drossel (34), wobei bass der Strömungswiderstand der Drossel (34) von der Strömungsrichtung abhängt, vorzugsweise **dadurch**, dass die Geometrie auf beiden Seiten der Durchströmung unterschiedlich ist.

5. Adsorptionswärmepumpe mit mindestens einem Wärmepumpenmodul (12), in dem sich ein Adsorber/Desorber (1) sowie ein Verdampfer/Kondensator (13) befinden, einer Wärmequelle (2) und einer Wärmesenke (3), mit einem 3-Wege-Umschattventil (26) nach einem der Ansprüche 1 bis 4, wobei dass mittels des 3-Wege-Umschaltventils (26)
für die Desorption die Wärmequelle (2) lediglich mit dem Adsorber/Desorber (1) oder mit dem Adsorber/Desorber (1) und parallel mit der Wärmesenke (3) verbindbar ist und
für die Adsorption der Adsorber/Desorber (1) mit der Wärmesenke (3) verbindbar und die Durchströmung der Wärmequelle (2) verschließbar ist.

6. Adsorptionswärmepumpe mit 3-Wege-Umschaltventil (26) nach Anspruch 5, wobei bei der parallelen Durchströmung des Adsorbers/Desorbers (1) und der Wärmesenke (3) der Durchströmungskanal (32), in dem sich die Drossel (34) befindet, mit der Wärmesenke (3) verbunden ist.

## Claims

1. Three-way switching valve (26) comprising three connection points (27, 28, 29) and a switching element (30) having three interconnected flow ducts (31, 32, 33), the switching element (30) being switchable in such a way that all three connection points (27, 28, 29) are interconnected, **characterised in that** two of the three connection points (27, 28, 29) are interconnected or all three connection points (27, 28, 29) are separated from one another, at least one (32) of the three flow ducts (31, 32, 33) having a cross-section which is different from the other flow ducts (31, 33), or a throttle (34) being provided in at least one (32) of the three flow ducts (31, 32, 33) so that the flow resistance of the flow duct (32), in which the throttle (34) is located, differs from the flow resistance of the other flow ducts (31, 33).

2. Three-way switching valve (26) according to claim 1, wherein all three flow ducts (31, 32, 33) have different cross-sections.

3. Three-way switching valve (26) according to claim 1 or 2, wherein at least two flow ducts (31, 32, 33) have throttles (34).

4. Three-way switching valve (26) according to one of claims 1 to 3, comprising at least one throttle (34), wherein the flow resistance of the throttle (34) is dependent on the direction of flow, the geometry on either side of the flow preferably being different.

5. Adsorption heat pump comprising at least one heat pump module (12), in which an adsorber/desorber (1) and an evaporator/condenser (13) are located, a heat source (2) and a heat sink (3), comprising a three-way switching valve (26) according to one of claims 1 to 4, wherein, for desorption, the heat source (2) is connectable by means of the three-way switching valve (26) merely to the adsorber/desorber (1) or to the adsorber/desorber (1) and parallel to the heat sink (3), and, for adsorption, the adsorber/desorber (1) is connectable to the heat sink (3) and the flow of the heat source (2) can be closed.

6. Adsorption heat pump comprising a three-way switching valve (26) according to claim 5, wherein the flow duct (32), in which the throttle (34) is located, is connected to the heat sink (3) during the parallel flow of the adsorber/desorber (1) and of the heat sink (3).

## Revendications

1. Vanne de commutation à trois voies (26) comprenant trois points de connexion (27, 28, 29) et un élément de commutation (30) comportant trois canaux d'écoulement interconnectés (31, 32, 33), l'élément de commutation (30) étant commutable de sorte que les trois points de connexion (27, 28, 29) sont interconnectés, **caractérisée en ce que** deux des trois points de connexion (27, 28, 29) sont interconnectés ou les trois points de connexion (27, 28, 29) sont séparés l'un de l'autre, au moins un (32) des trois canaux d'écoulement (31, 32, 33) comportant une section transversale qui diffère des autres canaux d'écoulement (31, 33), ou un manipulateur (34) étant présent dans au moins un (32) des trois canaux d'écoulement (31, 32, 33) de sorte que la résistance d'écoulement du canal d'écoulement (32), dans lequel le manipulateur (34) est situé, diffère de la résistance d'écoulement des autres canaux d'écoulement (31, 33).

2. Vanne de commutation à trois voies (26) selon la revendication 1, dans laquelle les trois canaux d'écoulement (31, 32, 33) comportent différentes sections transversales.

3. Vanne de commutation à trois voies (26) selon la revendication 1 ou 2, dans laquelle au moins deux canaux d'écoulement (31, 32, 33) comportent des manipulateurs (34).

4. Vanne de commutation à trois voies (26) selon l'une des revendications 1 ou 3, comprenant au moins un manipulateur (34), dans laquelle la résistance d'écoulement du manipulateur (34) dépend de la direction de l'écoulement, la géométrie de chaque côté de l'écoulement étant préférablement différente.

5. Pompe à chaleur d'adsorption comprenant au moins un module de pompe à chaleur (12), dans laquelle un adsorpteur/désorbeur (1) et un évaporateur/condenseur (13) sont situés, une source de chaleur (2) et un dissipateur de chaleur (3), comprenant une vanne de commutation à trois voies (26) selon l'une des revendications 1 à 4, dans laquelle, pour la désorption, la source de chaleur (2) peut être connectée au moyen de la vanne de commutation à trois voies (26) seulement à l'adsorpteur/désorbeur (1) ou à l'adsorpteur/désorbeur (1) et parallèlement au dissipateur de chaleur (3), et, pour l'adsorption, l'adsorpteur/désorbeur (1) peut être connecté au dissipateur de chaleur (3) et l'écoulement de la source de chaleur (2) peut être fermé.

6. Pompe à chaleur d'adsorption comprenant une vanne de commutation à trois voies (26) selon la revendication 5, dans laquelle le canal d'écoulement (32), dans lequel le manipulateur (34) est situé, est connecté au dissipateur de chaleur (3) pendant le flux parallèle de l'adsorpteur/désorbeur (1) et du dissipateur de chaleur (3) .
